(19) Europäisches Patentamt
European Patent Office
Office européen des brevets

(11) Veröffentlichungsnummer: **0 428 930 B1**

(12) **EUROPÄISCHE PATENTSCHRIFT**

(45) Veröffentlichungstag der Patentschrift: **07.09.94**

(51) Int. Cl.5: **C09B 29/042**, C09B 29/42

(21) Anmeldenummer: **90121099.7**

(22) Anmeldetag: **03.11.90**

Die Akte enthält technische Angaben, die nach dem Eingang der Anmeldung eingereicht wurden und die nicht in dieser Patentschrift enthalten sind.

# (54) Thiazolazofarbstoffe.

(30) Priorität: **16.11.89 DE 3938093**

(43) Veröffentlichungstag der Anmeldung:
**29.05.91 Patentblatt 91/22**

(45) Bekanntmachung des Hinweises auf die Patenterteilung:
**07.09.94 Patentblatt 94/36**

(84) Benannte Vertragsstaaten:
**CH DE FR GB IT LI**

(56) Entgegenhaltungen:
**EP-A- 0 135 131**
**EP-A- 0 244 740**
**DE-A- 2 062 717**
**GB-A- 2 071 684**

(73) Patentinhaber: **BASF Aktiengesellschaft**
**Carl-Bosch-Strasse 38**
**D-67063 Ludwigshafen (DE)**

(72) Erfinder: **Etzbach, Karl-Heinz, Dr.**
**Carl-Bosch-Ring 55**
**W-6710 Frankenthal (DE)**
Erfinder: **Hansen, Guenter, Dr.**
**Alwin-Mittasch-Platz 8**
**W-6700 Ludwigshafen (DE)**
Erfinder: **Lamm, Gunther, Dr.**
**Heinrich-Heine-Strasse 7**
**W-6733 Hassloch (DE)**
Erfinder: **Wiesenfeldt, Matthias, Dr.**
**Rosenstrasse 10**
**W-6704 Mutterstadt (DE)**

**EP 0 428 930 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.09/3.3.3)

## Beschreibung

Die vorliegende Erfindung betrifft neue Thiazolazofarbstoffe der Formel I

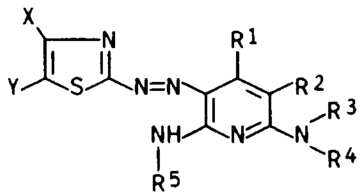

(I),

in der

| | |
|---|---|
| X | Chlor, Cyano oder $C_1$-$C_4$-Alkoxycarbonyl, |
| Y | einen Rest der Formel -CH = T, wobei T für Hydroxyimino, $C_1$-$C_4$-Alkoxyimino, $C_1$-$C_4$-Alkylimino, Phenylimino der den Rest einer CH-aciden Verbindung steht, |
| $R^1$ | $C_1$-$C_4$-Alkyl, |
| $R^2$ | Cyano, $C_1$-$C_4$-Alkoxycarbonyl, Carbamoyl oder $C_1$-$C_4$-Mono- oder Dialkylcarbamoyl und |
| $R^3$, $R^4$ und $R^5$ | unabhängig voneinander jeweils Wasserstoff, $C_1$-$C_{10}$-Alkyl, das gegebenenfalls durch 1 bis 3 Sauerstoffatome unterbrochen ist und durch Phenyl, Hydroxy, $C_1$-$C_4$-Alkanoyloxy, Benzoyloxy, Imidazol-1-yl, oder Phenoxy substituiert sein kann, oder gegebenenfalls durch $C_1$-$C_4$-Alkyl oder $C_1$-$C_4$-Alkoxy substituiertes Phenyl oder $R^3$ und $R^4$ zusammen mit dem sie verbindenden Stickstoffatom Pyrrolidino, Piperidino, Morpholino, Piperazino oder N-($C_1$-$C_4$-Alkyl)piperazino bedeuten, |

mit der Maßgabe, daß $R^3$ und $R^4$ nicht identisch sind, sowie die Verwendung der neuen Farbstoffe zum Färben oder Bedrucken von textilern Fasern.

Aus der DE-A-3 108 077 (≙ GB-A-2 071 684) sind Azofarbstoffe bekannt, die sich von der Diazokomponente 2-Amino-4-chlor-5-formylthiazol ableiten und die als Kupplungskomponente u.a. 2,6-Dibutylamino- oder 2,6-Bis(3'-methoxypropylamino)-3-cyano-4-methylpyridin aufweisen. Weiterhin beschreibt die EP-A-244 740 Thiazolylazopyridinfarbstoffe.

Aufgabe der vorliegenden Erfindung war es, neue Thiazolazofarbstoffe bereitzustellen, die über ein vorteilhaftes anwendungstechnisches Eigenschaftsprofil verfügen.

Demgemäß wurden die eingangs näher bezeichneten Thiazolazofarbstoffe der Formel I gefunden.

Alle in der obengenannten Formel I auftretenden Alkylgruppe können sowohl geradkettig als auch verzweigt sein.

Reste X und $R^2$ sind z.B. Methoxycarbonyl, Ethoxycarbonyl, Propoxycarbonyl, Isopropoxycarbonyl, Butoxycarbonyl, Isobutoxycarbonyl oder sec-Butoxycarbonyl.

Reste $R^2$ sind weiterhin z.B. Mono- oder Dimethylcarbamoyl, Mono- oder Diethylcarbamoyl, Mono- oder Dipropylcarbamoyl, Mono- oder Diisopropylcarbamoyl, Mono- oder Dibutylcarbamoyl oder N-Methyl-N-ethylcarbamoyl.

Reste Y sind z.B. Methoxyimino, Ethoxyimino, Propoxyimino, Isopropoxyimino, Butoxyimino, Methylimino, Ethylimino, Propylimino, Isopropylimino oder Butylimino.

Reste $R^1$, $R^3$, $R^4$ und $R^5$ sind z.B. Methyl, Ethyl, Propyl, Isopropyl, Butyl, Isobutyl oder sec-Butyl.

Reste $R^3$, $R^4$ und $R^5$ sind weiterhin z.B. Pentyl, Isopentyl, Neopentyl, tert-Pentyl, Hexyl, Heptyl, Octyl, 2-Ethylhexyl, Nonyl, Decyl, Benzyl, 1- oder 2-Phenylethyl, 2-Hydroxyethyl, 2- oder 3-Hydroxypropyl, 1-Hydroxyprop-2-yl, 2-Hydroxybutyl, 1-Hydroxybut-2-yl, 4-Hydroxybutyl, 8-Hydroxy-4-oxaoctyl, 2-Methoxyethyl, 2-Ethoxyethyl, 2-Propoxyethyl, 2-Butoxyethyl, 2-Isobutoxyethyl, 2- oder 3-Methoxypropyl, 1-Methoxyprop-2-yl, 3-Ethoxypropyl, 3-Propoxypropyl, 2-Phenoxyethyl, 4,7-Dioxaoctyl, 4,7-Dioxanonyl, 4,8-Dioxadecyl, 4,6-Dioxaundecyl, 3-Benzyloxypropyl, 6-Phenoxy-4-oxahexyl, 2-Acetyloxyethyl, 2-Propionyloxyethyl, 2-Butyryloxyethyl, 2-Acetyloxypropyl, 3-Acetyloxypropyl, 2-Propionyloxypropyl, 2-Acetyloxybutyl, 4-Acetyloxybutyl, 2-Propionyloxybutyl, 5-Acetyloxy-3-oxapentyl, 8-Acetyloxy-4-oxaoctyl, 2-Benzoyloxyethyl, 3-(Imidazol-1-yl)propyl, 5-Phenyl-4-oxapentyl, 6-Phenyl-4-oxahexyl, 4,7,10-Trioxaundecyl, 4,7,10-Trioxadodecyl, Phenyl oder 2-Methoxyphenyl, 2-Benzoyloxypropyl oder 2-Benzoyloxybutyl.

Im Rest -CH = T, worin T sich von einer CH-aciden Verbindung $H_2T$ ableitet, können als CH-acide Verbindungen $H_2T$ z.B. Verbindungen der Formeln II bis VII

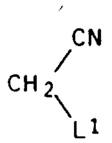

(II)

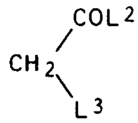

(III)

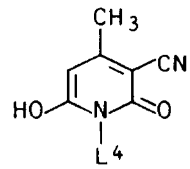

(IV)

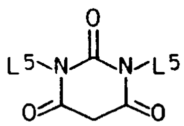

(V)

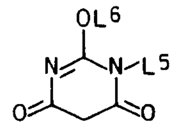

(VI)

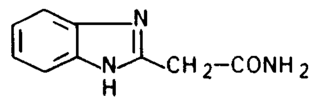

(VII)

in Betracht kommen, wobei

$L^1$ Cyano, Nitro, $C_1$-$C_4$-Alkanoyl, gegebenenfalls durch $C_1$-$C_4$-Alkyl, $C_1$-$C_4$-Alkoxy oder Halogen substituiertes Benzoyl, $C_1$-$C_4$-Alkylsulfonyl, gegebenenfalls durch $C_1$-$C_4$-Alkyl, $C_1$-$C_4$-Alkoxy oder Halogen substituiertes Phenylsulfonyl, Carboxyl, $C_1$-$C_4$-Alkoxycarbonyl, Phenoxycarbonyl, Carbamoyl, $C_1$-$C_4$-Mono- oder Dialkylcarbamoyl, gegebenenfalls durch $C_1$-$C_4$-Alkyl, $C_1$-$C_4$-Alkoxy oder Halogen substituiertes Phenylcarbamoyl, gegebenenfalls durch $C_1$-$C_4$-Alkyl, $C_1$-$C_4$-Alkoxy, Halogen oder Nitro substituiertes Phenyl, Benzthiazol-2-yl, Benzimidazol-2-yl, 5-Phenyl-1,3,4-thiadiazol-2-yl oder 2-Hydroxychinoxalin-3-yl,

$L^2$ $C_1$-$C_4$-Alkyl oder $C_1$-$C_4$-Alkoxy,

$L^3$ $C_1$-$C_4$-Alkoxycarbonyl, Phenylcarbamoyl oder Benzimidazol-2-yl,

$L^4$ Wasserstoff oder $C_1$-$C_6$-Alkyl,

$L^5$ Wasserstoff, $C_1$-$C_4$-Alkyl oder Phenyl und

$L^6$ $C_1$-$C_4$-Alkyl bedeuten.

Bevorzugt sind Thiazolazofarbstoffe der Formel I, in der

$R^1$ Methyl,

$R^2$ Cyano und

$R^3$ Wasserstoff oder $C_1$-$C_4$-Alkyl bedeuten.

Weiterhin bevorzugt sind Thiazolazofarbstoffe der Formel I, in der

$R^4$ $C_3$-$C_8$-Alkyl, das durch 1 oder 2 Sauerstoffatome unterbrochen und/oder durch Phenyl, Hydroxy, $C_1$-$C_4$-Alkanoyloxy oder Phenoxy substituiert ist, und

$R^5$ Wasserstoff oder $C_2$-$C_6$-Alkyl, das gegebenenfalls durch 1 oder 2 Sauerstoffatome unterbrochen ist und durch Phenyl oder Phenoxy substituiert sein kann, bedeuten.

Die erfindungsgemäßen Thiazolazofarbstoffe der Formel I lassen sich nach an sich bekannten Verfahren herstellen. Beispielsweise kann man ein Aminothiazol der Formel II

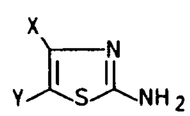

(II),

in der X und Y jeweils die obengenannte Bedeutung besitzen, diazotieren und mit einem Diaminopyridin der Formel III

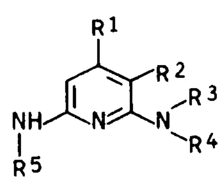

(III),

in der $R^1$, $R^2$, $R^3$, $R^4$ und $R^5$ jeweils die obengenannte Bedeutung besitzen, kuppeln.

Bei den Aminothiazolen II und Aminopyridinen III handelt es sich im allgemeinen um bekannte Verbindungen (siehe z.B. DE-A-3 108 077 sowie EP-A-316 731).

Die neuen Thiazolazofarbstoffe eignen sich vorteilhaft als Dispersionsfarbstoffe zum Färben oder Bedrucken von textilen Fasern, insbesondere von Polyestern oder Celluloseestern, aber auch von Polyamiden oder Mischgeweben aus Polyestern und Cellulosefasern. Sie zeichnen sich neben hoher Farbstärke durch sehr gute Echtheiten aus.

Die folgenden Beispiele sollen die Erfindung näher erläutern.

Beispiel 1

2,3 g des Farbstoffs der Formel

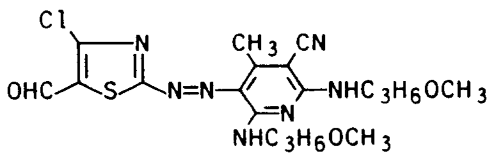

wurden in 50 ml Propanol mit 0,7 g Malodinitril und 0,5 g Natriumacetat 4 Stunden bei Raumtemperatur gerührt. Danach wurde abgesaugt, zunächst mit Propanol, dann mit Wasser gewaschen und getrocknet. Man erhielt 2,3 g (91 %) des Farbstoffs der Formel

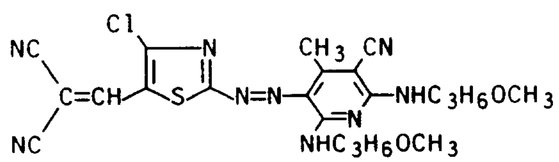,

der Polyestermaterial in violettem Ton mit sehr guten Echtheiten färbt.
$\lambda_{max}$ ($CH_2Cl_2$): 585 nm
(Der Farbstoff kann auch erhalten werden, indem man zunächst die Diazokomponente mit Malodinitril umsetzt und dann die Kupplung durchführt).

In analoger Weise werden die in der folgenden Tabelle aufgeführten Farbstoffe erhalten.

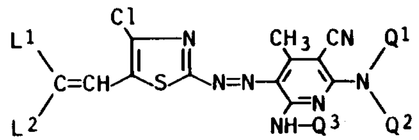

| Beisp. Nr. | $L^1$ | $L^2$ | $Q^1$ | $Q^2$ | $Q^3$ | Farbton auf PES |
|---|---|---|---|---|---|---|
| 2 | $COOC_4H_9$ | CN | H | $C_2H_4OH$ | $C_3H_6OC_2H_5$ | blauviolett |
| 3 | $COOC_4H_9$ | CN | $C_2H_5$ | $(CH_2)_3OCH_3$ | $C_3H_6OC_2H_4OC_6H_5$ | blau |
| 4 | CN | CN | $C_2H_5$ | $(CH_2)_3OCH_3$ | $C_3H_6OC_2H_4OC_6H_5$ | blau |
| 5 | CN | CN | H | $CH_2CH_2OCH_3$ | $C_3H_6OC_2H_4OC_6H_5$ | blauviolett |
| 6 | CN | CN | $C_2H_5$ | $(CH_2)_3OCH_3$ | $C_3H_6OCH_3$ | blauviolett |
| 7 | CN | $COOC_4H_9$ | H | $C_2H_4OCH_3$ | 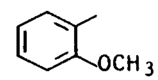 | violett |
| 8 | CN | CN | H | $C_2H_4OH$ | 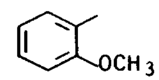 | violett |
| 9 | CN | CN | H | 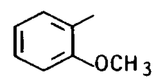 | $C_3H_6OCH_3$ | blau |
| 10 | CN | CN | H | 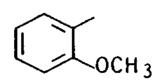 | $C_2H_4OCH_3$ | blau |
| 11 | CN | $COOC_4H_9$ | H | $C_3H_6OCH_3$ | $C_3H_6OCH_3$ | blau |
| 12 | CN | $COOC_4H_9$ | H | $C_2H_4OCH_3$ | $C_3H_6OC_2H_4OC_6H_5$ | blau |
| 13 | CN | $COOC_2H_5$ | H | $C_2H_4OCH_3$ | $C_3H_6OCH_3$ | blau |
| 14 | CN | $COOC_2H_4OCH_3$ | $C_2H_5$ | $C_2H_4OCH_3$ | $C_3H_6OCH_3$ | blau |
| 15 | $NO_2$ | H | H | $C_2H_4OCH_3$ | $C_2H_4OCH_3$ | blau |

## Patentansprüche

**1.** Thiazolazofarbstoffe der Formel I

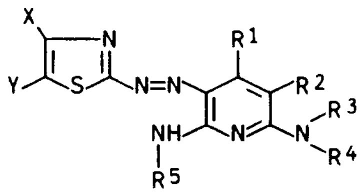

(I),

in der

| | |
|---|---|
| X | Chlor, Cyano oder $C_1$-$C_4$-Alkoxycarbonyl, |
| Y | einen Rest der Formel -CH=T, wobei T für Hydroxyimino, $C_1$-$C_4$-Alkoxyimino, $C_1$-$C_4$-Alkylimino, Phenylimino der den Rest einer CH-aciden Verbindung steht, |
| $R^1$ | $C_1$-$C_4$-Alkyl, |
| $R^2$ | Cyano, $C_1$-$C_4$-Alkoxycarbonyl, Carbamoyl oder $C_1$-$C_4$-Mono- oder Dialkylcarbamoyl und |
| $R^3$, $R^4$ und $R^5$ | unabhängig voneinander jeweils Wasserstoff, $C_1$-$C_{10}$-Alkyl, das gegebenenfalls durch 1 bis 3 Sauerstoffatome unterbrochen ist und durch Phenyl, Hydroxy, $C_1$-$C_4$-Alkanoyloxy, Benzoyloxy, Imidazol-1-yl, oder Phenoxy substituiert sein kann, oder gegebenenfalls durch $C_1$-$C_4$-Alkyl oder $C_1$-$C_4$-Alkoxy substituiertes Phenyl oder $R^3$ und $R^4$ zusammen mit dem sie verbindenden Stickstoffatom Pyrrolidino, Piperidino, Morpholino, Piperazino oder N-($C_1$-$C_4$-Alkyl)piperazino bedeuten, |

mit der Maßgabe, daß $R^3$ und $R^4$ nicht identisch sind.

**2.** Thiazolazofarbstoffe nach Anspruch 1, dadurch gekennzeichnet, daß

| | |
|---|---|
| $R^1$ | Methyl, |
| $R^2$ | Cyano und |
| $R^3$ | Wasserstoff oder $C_1$-$C_4$-Alkyl bedeuten. |

**3.** Thiazolazofarbstoffen nach Anspruch 1, dadurch gekennzeichnet, daß

| | |
|---|---|
| $R^4$ | $C_3$-$C_8$-Alkyl, das durch 1 oder 2 Sauerstoffatome unterbrochen und/oder durch Phenyl, Hydroxy, $C_1$-$C_4$-Alkanoyloxy oder Phenoxy substituiert ist, und |
| $R^5$ | Wasserstoff oder $C_2$-$C_6$-Alkyl, das gegebenenfalls durch 1 oder 2 Sauerstoffatome unterbrochen ist und durch Phenyl oder Phenoxy substituiert sein kann, bedeuten. |

**4.** Verwendung der Thiazolazofarbstoffe gemäß Anspruch 1 zum Färben oder Bedrucken von textilen Fasern.

## Claims

**1.** A thiazoleazo dye of the formula I

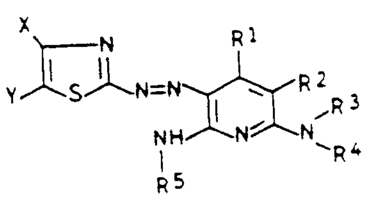

(I)

where

| | |
|---|---|
| X | is chlorine, cyano or $C_1$-$C_4$-alkoxycarbonyl, |
| Y | is a radical of the formula -CH=T, where T is hydroxyimino, $C_1$-$C_4$-alkoxyimino, $C_1$-$C_4$-alkylimino, phenylimino or the radical of an acidic CH compound, |
| $R^1$ | is $C_1$-$C_4$-alkyl, |

$R^2$ is cyano, $C_1$-$C_4$-alkoxycarbonyl, carbamoyl or $C_1$-$C_4$-mono- or -dialkylcarbamoyl, and

$R^3$, $R^4$ and $R^5$ are each independently of the others hydro gen, $C_1$-$C_{10}$-alkyl, which may be interrupted by from 1 to 3 oxygen atoms and be phenyl-, hydroxyl-, $C_1$-$C_4$-alkanoyloxy-, benzoyloxy-, 1-imidazolyl- or phenoxy-substituted, or unsubstituted or $C_1$-$C_4$-alkyl- or $C_1$-$C_4$-alkoxy-substituted phenyl, or $R^3$ and $R^4$ together combine with the nitrogen atom joining them together to form pyrrolidino, piperidino, morpholino, piperazino or N-($C_1$-$C_4$-alkyl)piperazino,

with the proviso that $R^3$ and $R^4$ are not identical.

**2.** A thiazoleazo dye as claimed in claim 1, wherein

$R^1$ is methyl,
$R^2$ is cyano and
$R^3$ is hydrogen or $C_1$-$C_4$-alkyl.

**3.** A thiazoleazo dye as claimed in claim 1, wherein

$R^4$ is $C_3$-$C_8$-alkyl which is interrupted by 1 or 2 oxygen atoms and/or substituted by phenyl, hydroxyl, $C_1$-$C_4$-alkanoyloxy or phenoxy, and
$R^5$ is hydrogen or $C_2$-$C_6$-alkyl, which may be interrupted by 1 or 2 oxygen atoms and substituted by phenyl or phenoxy.

**4.** The use of a thiazoleazo dye as claimed in claim 1 for dyeing or printing textile fibers.

**Revendications**

**1.** Colorants thiazolazoïques de formule I

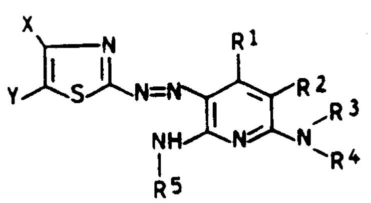

(I),

dans laquelle

X représente un atome de chlore, un groupe cyano ou (alcoxy en $C_1$-$C_4$)carbonyle,
Y représente un reste de formule -CH=T, dans lequel T est mis pour un groupe hydroxyimino, alcoxyimino en $C_1$-$C_4$, alkylimino en $C_1$-$C_4$, phénylimino qui constitue le reste d'un compose à CH acide,
$R^1$ représente un groupe alkyle en $C_1$-$C_4$,
$R^2$ représente un groupe cyano, (alcoxy en $C_1$-$C_4$)carbonyle, carbamoyle ou mono- ou di(alkyle en $C_1$-$C_4$)carbamoyle et
$R^3$ $R^4$ et $R^5$ représentent chacun indépendamment l'un de l'autre un atome d'hydrogène, un groupe alkyle en $C_1$-$C_{10}$,qui est éventuellement interrompu par 1 à 3 atomes d'oxygène et qui peut être substitué par un groupe phényle, hydroxy, alcanoyloxy en $C_1$-$C_4$, benzoyloxy, imidazol-1-yle, ou phénoxy, ou un groupe phényle éventuellement substitué par un groupe alkyle en $C_1$-$C_4$ ou alcoxy en $C_1$-$C_4$, ou $R^3$ et $R^4$ représentent avec l'atome d'azote qui leur est relié un groupe pyrrolidino, pipéridino, morpholino, pipérazino ou N-(alkyle en $C_1$-$C_4$)pipérazino,

à condition que $R^3$ et $R^4$ ne soient pas identiques.

**2.** Colorants thiazolazoïques selon la revendication 1, caractérisés en ce que

$R^1$ est un groupe méthyle,
$R^2$ un groupe cyano et
$R^3$ un atome d'hydrogène ou un groupe alkyle en $C_1$-$C_4$.

3. Colorants thiazolazoïques selon la revendication 1, caractérisés en ce que
   $R^4$ représente un groupe alkyle en $C_3$-$C_8$, qui est interrompu par 1 ou 2 atomes d'oxygène et/ou substitué par un groupe phényle, hydroxy, alcanoyloxy en $C_1$-$C_4$ ou phénoxy, et
   $R^5$ représente un atome d'hydrogène ou un groupe alkyle en $C_2$-$C_6$, qui est éventuellement interrompu par 1 ou 2 atomes d'oxygène et peut être substitué par un groupe phényle ou phénoxy.

4. Utilisation des colorants thiazolazoïques selon la revendication 1 pour la teinture ou l'impression de fibres textiles.